# EUROPÄISCHE PATENTSCHRIFT

(11) **EP 3 015 915 B1**
(45) Veröffentlichungstag und Bekanntmachung des Hinweises auf die Patenterteilung: **28.04.2021**
(21) Anmeldenummer: 15190906.6
(22) Anmeldetag: 21.10.2015
(51) Int. Cl.: G02F 1/13357, G02F 1/1347

(54) **EINE MIT EINEM ENERGIESPARENDEN RÜCKBELEUCHTUNGSSYSTEM VERSEHENE ANZEIGEVORRICHTUNG, DIE AN EINE FENSTERSCHEIBE ANGEBRACHT WIRD**
DISPLAY DEVICE HAVING AN ENERGY-SAVING BACKLIGHT SYSTEM WHICH IS MOUNTED TO A WINDOW-PANE
UN AFFICHEUR AYANT UN SYSTÈME DE RÉTROÉCLAIRAGE À ÉCONOMIE D'ÉNERGIE MONTÉ SUR UNE VITRE

(30) Priorität: 24.10.2014 DE 102014115531
(43) Veröffentlichungstag der Anmeldung: 04.05.2016
(73) Patentinhaber: Annax Anzeigesysteme GmbH, 85649 Brunnthal (DE)
(72) Erfinder: Malcherek, Werner, 85221 Dachau (DE)
(74) Vertreter: Pöhner, Wilfried Anton

(56) Entgegenhaltungen:
- US-A1- 2010 177 025

## Beschreibung

Die Erfindung betrifft eine Anzeigevorrichtung für Schriften und Bilder zur Anbringung auf Scheiben gemäß des unabhängigen Anspruchs 1.

Der Begriff "Bildschirm", häufig als Monitor, Screen, Display bezeichnet, ist gemäß üblicher Terminologie als eine Anzeigetafel zu verstehen, die zur optischen Anzeige von i. a. R. sich verändernden Informationen, wie z. B. Schriftzeichen und Bilder genutzt wird, wobei diese auf elektronischer Weise angesteuert wird, ohne dass es hierzu beweglicher Teile bedarf. Die Begriffe "Bildschirm, Screen, Display und Monitor" werden häufig auf synonyme Art und Weise eingesetzt, obwohl sich bei exakter philologischer Untersuchung Unterschiede ergeben. So wird bei optischen Projektionen die der Wiedergabe des Bildes dienende Leinwand häufig als "Screen" bezeichnet. Mit "Display" werden Anzeigegeräte im weiteren Sinne benannt, so auch die in der Werbung eingesetzten und der Präsentation dienenden Tafeln (=Flipcharts) hierunter verstanden werden. Als "Monitore" werden hingegen nur jene Bildschirme bezeichnet, die als Bauteile eines größeren Verbundes oder als Peripherie eingesetzt werden. Unter dem Begriff "Bildschirm" ist im Sinne der Erfindung ein Gerät zu verstehen, das der unmittelbaren und direkten Anzeige von Informationen dient. Für die konkrete Art und Weise der technischen Umsetzung sind verschiedene Techniken grundsätzlich bekannt. Die vorliegende Erfindung bezieht sich auf jene Bildschirme, für deren technische Umsetzung eine Hinterleuchtung des Bildschirmes erforderlich ist. Hierzu zählen die Flüssigkristallbildschirme, die in ihrem grundsätzlichen Aufbau und in Draufsicht aus segmentartig den gesamten Bildschirm aufspannenden Flüssigkristallen bestehen, die jeweils individuell und unabhängig voneinander in ihrer Einstellung geändert werden können. Dahinter schließt sich die Hintergrundbeleuchtung an, deren Transmission durch den jeweils davor befindlichen Flüssigkristall entweder gesperrt oder zugelassen wird. Die gesamte pixelartige Anordnung aller LCDs ergibt in ihrer Gesamtheit den Bildschirm bzw. das Bild. Im Hinblick auf Aufbau, Ansteuerung und Wirkungsweise der einzelnen Flüssigkristalle lassen sich unterschiedliche technische Typen unterscheiden, deren konkrete bauliche Umsetzung und Verwendung im Rahmen dieser Erfindung bedeutungslos ist und deshalb keiner näheren Erläuterungen bedarf. Auch ist die jeweilige elektronische Ansteuerung, die elektrische Kontaktierung usw. sind nicht Gegenstand dieser Erfindung und stehen grundsätzlich frei.

Dem üblichen Aufbau des Standes der Technik entsprechend ist unmittelbar hinter den einzelnen Segmenten (Pixel) des LCD-Kristalles eine Lichtquelle angebracht. Hierbei ist der Ursprung des Lichtes im allgemeinsten Fall weitgehend beliebig und wird in häufigen Anwendungsfällen dadurch hergestellt, dass eine Leuchtfläche aus LED-Lichtquellen den Flüssigkristallen (=LCs) nachgeschaltet wird. In einer anderen baulichen Alternativen werden an den Seitenkanten des Bildschirmes anzuordnende optische Lichtquellen, bei denen es sich i. d. R. um Röhren handelt, angebracht und das Licht von dort auf die Rückseite der aus den LCDs gebildeten Fläche geleitet. Für die Bildqualität entscheidend ist, dass eine in der Fläche möglichst gleichmäßige Ausleuchtung des LCD durch die Gesamtheit aller Lichtquellen mit vergleichsweise hoher Lichtstärke möglich wird.

Besonderer Erwähnung bedarf die den Flüssigkristallbildschirmen als Unterbegriff zuordenbaren TFT-LCDs (TFT = thin film transistor), die auch gemeinhin als Dünnschichttransistorbildschirm bezeichnet werden. Die Verwendung von Dünnschichttransistoren haben mehrere Vorzüge, von denen u.a. zu erwähnen ist, dass die Transistoren eine aktive Ansteuerung der einzelnen Pixel möglich macht und aus diesem Grund als Aktiv-Matrix-Display Bezeichnung findet. Beim Einsatz von drei Transistoren pro Bildpunkt ist eine farbige Darstellung grundsätzlich möglich.

Hiervon ausgehend hat sich die Erfindung zur Aufgabe gemacht, die Anzeigevorrichtung für Schriften und Bilder, die einen Bildschirm umfassen, dahingehend weiter zu entwickeln, dass der Energieverbrauch während des Betriebes auf ein Minimum reduziert wird.

In der Veröffentlichungsschrift US 2010/0177025 A1 werden verschiedene Ausführungsformen einer Informationsanzeigevorrichtung zum Anzeigen farbiger Bilder mit einer in ihrer Reflektivität schaltbaren Schicht in einer Lichtleitplatte als Teil eines Hintergrundbeleuchtungssystems vorgestellt, welches zur Integration in oder anbringen an Fenster- bzw. Fahrzeugfensterscheiben vorgeschlagen wird. Das Hintergrundbeleuchtungssystem erlaubt hierbei, entweder das Licht einer internen Lichtquelle oder aber rückseitig auftrefendes Umgebungslicht zur Hintergrundbeleuchtung einzusetzen.

Gelöst wird diese Aufgabe erfindungsgemäß durch die Anzeigevorrichtung des Anspruchs 1.

Gemäß der Erfindung wird in Bildschirm von herkömmlichem Aufbau eingesetzt, dessen Hinterleuchtung durch additive Überlagerung des durch LED-Lichtquellen erzeugten Lichtes mit dem von außen das Smart Window durchgreifende auftreffenden natürlichen Licht erzeugt wird, wobei eines der Kernprobleme die sich ändernden Stärke des von außen auftreffenden Lichtes ist. Zur Beseitigung dieser Schwierigkeit ist der optische Sensor vorhanden, welcher die LED-Beleuchtung derart einstellt, dass das in seiner Gesamtheit auf der Rückseite des Bildschirms ankommende Licht, bestehend aus dem natürlichen Licht plus dem LED-Licht, während der Nutzungsdauer und bei sich ändernden Lichtverhältnissen eine im Wesentlichen konstante Stärke beibehält. In Abhängigkeit von der Stärke des auftreffenden Lichtes, welches durch den optischen Sensor erfasst werden kann, wird die LED-Beleuchtung entsprechend eingestellt. Im einen Extremfall ist das von außen auftreffende Licht von einer solchen hohen und hinreichenden Intensität, dass die LED-Beleuchtung ausgeschaltet werden kann. Im entgegengesetzten Fall, d. h. bei sehr geringer Intensität des von außen auftreffenden Lichts, muss die Hinterleuchtung des Bildschirms ausschließlich über die LEDs erfolgen.

In einem solchen Fall empfiehlt sich das Smart Window auf undurchlässig zu schalten und die Innenfläche des Smart Windows als Reflexionsfläche für das in diesem Raumbereich auftreffende LED-Licht zu nutzen. Das LED-Licht trifft dann auf der der Auftrefffläche des wechselnden/natürlichen Lichts gegenüberliegenden Seite auf das Smart Window auf. Es ist dann sichergestellt, dass ggf. mit zusätzlicher Unterstützung eines entsprechend angeordneten Reflektors ein Maximum der von den LED emittierten Lichtenergie zum Bildschirm gelangt.

Die Vorschriften der Patentbehörde enthalten das Erfordernis der Verwendung deutschsprachiger Begriffe. Dies soll im Hinblick auf den Begriff "Smart Window" jedoch durchbrochen werden, da eine diesem englischen Fachbegriff vergleichbare und zutreffende Übersetzung in die deutsche Sprache nicht bekannt ist. Derartige Smart Windows werden zum Teil als Switchable Windows bezeichnet, d. h. um Fenster, in denen SmartGlass oder Switchable Glass, eingebaut ist. Diese technische Bezeichnung umfasst alle Fenster und Gläser, die eine Veränderung der Lichttransmission unter Anwendung von Spannung, Licht oder Hitze zulassen. Smart Windows sind in der Lage, die Lichtdurchlässigkeit und demzufolge auch das Maß der Wärmeeinstrahlung auf die gewünschten Werte einzuregeln. Bei entsprechender Ansteuerung ändert sich die Lichtdurchlässigkeit von transparent zu transluzent bis hin zur völligen Undurchlässigkeit von nahezu allen Lichtwellenlängen. Aus dem Stande der Technik sind hierzu unterschiedliche Techniken eingesetzt, zu denen Elektrochrome, Fotochrome, Thermochrome und Flüssigkristallanordnungen zählen. Die Definition des Begriffes "Smart Window" umfasst alle optisch schaltbare Fenster, wobei als schaltbare Elemente Elektrochrome oder LCD-Substanzen Verwendung finden.

Der Aufbau des Bildschirms ist von üblicher Art. Die Bildschirmfläche wird durch eine Vielzahl von rasterartig angeordneten LCs (liquid crystals) aufgebaut, die eine Hinterleuchtung erfahren und die durch entsprechende elektronische Ansteuerung der einzelnen Pixel das Licht zur Erzeugung eines hellen Bildpunktes durchlassen oder aber absperren, wodurch dann ein dunkler Bildpunkt entsteht.

Das Wesen der Anzeige durch den Bildschirm lässt viele Möglichkeiten offen. So können Schriften aber Bilder Anzeige finden. Es ist auch möglich, laufende Texte nach Art eines Schriftbandes, d. h. in beweglichen über die Gesamtfläche des Bildschirms verlaufenden Buchstaben anzuzeigen.

Das dem Bildschirm gegenüber befindliche Smart Window ist aus dem Stande der Technik bekannt und bietet die Möglichkeit durch entsprechende Ansteuerung das "Window" kontinuierlich von lichtdurchlässig auf lichtundurchlässig zu schalten. Wenn die Intensität des von außen einfallenden Lichtes hinreichend hoch ist, wird das Smart Window auf Durchlass geschaltet und dient der Hinterleuchtung des Bildschirms. Ist hingegen das von außen auftretende Licht wie z. B. bei Fahrzeugen auf Nachtfahrt oder in einem Tunnel sehr gering, kann das Smart Window auf undurchlässig geschaltet werden oder, wie in einer vorteilhaften Ausgestaltung vorgesehen, die dem Bildschirm zugewandte Fläche des Smart Window, auf den ein Teil des LED-Lichtes auftrifft, auf Reflexion geschaltet und demzufolge zum Bildschirm hingeleitet und zur Hinterleuchtung genutzt wird. Zur konkreten Umsetzung der Lichtreflexion durch das Smart Window empfiehlt sich, die zum Bildschirm weisende Oberfläche auf die Farbe "weiß" einzustellen um damit ein Maximum an Reflexionsvermögen für das auftreffende Licht zu realisieren.

Der Vorteil der erfindungsgemäßen Lösung ist darin zu sehen, dass mit einem Minimum an Energieaufwand die Anzeige von stehenden und/oder laufenden Schriften und Bildern erfolgen kann. Die wesentliche Ursache ist, dass das in Blickrichtung von der Rückseite herauftreffende und kostenfrei zur Verfügung stehende Licht genutzt wird. Der Mangel der wechselnden Intensitäten des von außen auftreffenden Lichtes wird dadurch ausgeglichen, dass die Emission des LED-Lichtes in seiner Intensität gesteuert wird. Das LED-Licht teilweise ersetzt und ergänzt das von außen auftreffende i. d. R. natürliche Licht.

Das Umschalten des Smart Windows auf undurchlässig muss nicht erst dann vorgenommen werden, wenn das von außen auftreffende Licht vollständig erloschen ist, sondern dass bereits mit Erreichen eines Schwellwertes der Transmission eine Umschaltung des Smart Window auf Reflexion erfolgt. Im idealen Fall wird der Schwellwert so gewählt, dass der Beitrag des von außen auftreffenden Lichtes geringer ist als jener Anteil, der vom LED erzeugten Licht am Smart Window reflektiert wird. Die Ausnutzung von geringeren Intensitäten des von außen auftreffenden Lichtes gibt dann wenig Sinn, weil der vom Smart Window reflektierte Anteil des LED-Lichtes zu einer besseren Ausleuchtung beiträgt.

Bildschirm und ebenso Smart Window sind parallel zueinander in einem vergleichbar geringen Abstand ausgerichtet und positioniert. Im allgemeinsten Fall ist die Positionierung der LED-Beleuchtung relativ zum Bildschirm bzw. Smart Window beliebig und könnte beispielsweise zwischen den durch Bildschirm und Smart Window definierten Flächen angebracht sein. Obwohl eine grundsätzlich mögliche Realisierung ergibt sich hierbei der Nachteil, dass die LED-Beleuchtung selbst ein Hindernis für das vom Smart Window kommende und auf den Bildschirm auftreffende Licht darstellt und einen Teil der Lichtintensität abschirmt und somit zu einer ungewünschten Schwächung führt. Die LED-Beleuchtung kann in derjenigen Fläche angeordnet werden, die durch Bildschirm und Smart Window bzw. deren jeweils einander gegenüberliegende Rändern definiert ist. Bildschirm, Smart Window und Fläche beschreiben dann in ihrer Gesamtheit ein "U".

Bevorzugt ist in der den LED-Quellen im Abstand der Breite von Bildschirm bzw. von Smart Window gegenüberliegenden, von den Längskanten des Bildschirms und dem Smart Window ebenfalls definierten und somit der Fläche gegenüberliegenden Gegenfläche einen Reflektor anzuordnen. Man erhält im Ergebnis einen etwa rechteckförmigen Quader, dessen beide gegenüberliegenden Quaderflächen zum einen durch den Bildschirm und das Smart Window und dessen beide anderen dazwischenliegenden und jeweils die Verbindung zwischen Bildschirm und Smart Windows herstellenden Quaderflächen durch die im obigen Sinn definierte Fläche und Gegenfläche beschrieben werden, die entweder zur Aufnahme der LED-Beleuchtung (im Falle der Fläche) oder des Reflektors (im Falle der Gegenfläche) dienen. Bei dieser Anordnung der LED-Beleuchtung und des Reflektors ist der Innenraum des Quaders von den Lichtstrahlen ungehindert passierbar, ohne dass Störungen durch die LED-Lichtquellen stattfinden. Der Verlust von Lichtintensität wird weitgehend durch die Maßnahme reduziert, dass der die Gegenfläche beschreibende Reflektor alle auftreffenden Strahlen zurückwirft und deshalb weiterhin verwendbar macht. Die auftreffende Lichtenergie wird deshalb weiterhin einer Nutzung zugeführt.

Eine Ausnutzung des auf den Reflektor auftreffenden LED-Lichtes erfolgt dadurch, dass ein Teil des emittierten Lichtes und zwar jenes, das zwischen dem Raumwinkel des Lichtes, welches der unmittelbaren Ansteuerung des Bildschirms dient, und jenem Raumwinkel, in dem das LED-Licht direkt zum Smart Window gelangt und von diesem reflektiert wird, ein Winkelbereich begrenzt, bei dem das dorthin emittierte Licht über den Reflektor zurückgeworfen und in mehr oder weniger geringem Umfange doch noch zur Hinterleuchtung des Bildschirms Nutzung finden kann.

In einer besonders bevorzugten Ausgestaltung wird die LED-Beleuchtung dadurch verwirklicht, dass eine LED-Schiene angebracht wird, die äquidistant zwischen dem Bildschirm und dem Smart Window angeordnet sein sollte und sich in ihrer axialen Richtung parallel hierzu erstreckt. Die Schienenform garantiert eine gleichmäßige Ausleuchtung über die gesamte Breite, was durch punktuelle Lichtquellen nur unvollständig gewährleistet wäre.

In der Praxis ist der Abstand zwischen Bildschirm und Smart Window möglichst gering und abstandsmäßig so zu bemessen, dass die Lichtleiste mit den LED-Lichtquellen und demzufolge der gegenüberliegende Reflektor ausreichend Raum zur Verfügung steht. In der Praxis beträgt der Abstand 5 mm - 15 mm.

Als die die LED-Beleuchtung bildenden Lichtquellen kommen alle Lichtquellen in Betracht. Besonders bevorzugt ist, die LED-Beleuchtung aus LEDs und im Speziellen aus oLEDs (= organischen LEDs) und als einen Spezialfall hiervon wiederum die polymeren LEDs (= pLEDs) einzusetzen und zu verwenden. Der Einsatz auch anderer Lichtquellen ist nicht ausgeschlossen.

In einer Weiterbildung empfiehlt die Erfindung, dass die den Bildschirm bildenden LCDs durch TFTs (thin film transistor) ersetzt werden. Dies ist aus dem Stande der Technik allgemein bekannt. Der Vorteil der Verwendung von TFTs besteht in der Möglichkeit der Erzeugung farbiger Bilder. Als weiterer Vorzug ist zu werten, dass sie auf eine vollständige Lichtdurchlässigkeit umschaltbar sind und eine völlige Transparenz gewährleisten. Eine andere Art der elektronischen Ansteuerung ist jedoch genauso anwendbar.

Zur Durchführung und zum Erhalt der Funktion ist unabdingbar die Verwendung eines optischen Sensors, für dessen räumliche Anordnung innerhalb der Anzeigevorrichtung grundsätzlich zwei Positionen vorgesehen sind. Erfolgt die Anbringung des optischen Sensors unmittelbar am Smart Window in einer solchen Ausrichtung, dass das von außen auftreffende Licht wechselnder Intensität erfasst wird, woraus sich durch Differenzbildung aus dem unmittelbar am Bildschirm gewünschten Idealwert (Sollwert) ermitteln lässt, welche Intensität in additiver Weise durch die LED-Beleuchtung beizusteuern ist. Bei dieser Messmethode wird die Intensität des Lichtes am Bildschirm nicht erfasst sondern einen der idealen Ausleuchtung des Bildschirmes entsprechende Sollwert angenommen.

In einer Alternativen hingegen wird die gesamte auf dem Bildschirm auftreffende Lichtintensität gemessen. Der Sensor zeigt dann an, dass und um welchen Wert die emittierte Lichtintensität der LED-Quellen erhöht werden muss. Bei diesem Messverfahren unterbleibt eine direkte singuläre Messung der Intensität des von außen auftreffenden Lichtes.

Die vornehmliche Verwendung der erfindungsgemäß vorgeschlagenen Anzeigevorrichtung besteht darin, an Fensterscheiben von Fahrzeugen, Zügen, Flugzeugen und dergleichen angebracht zu werden, wobei die Scheiben i. d. R. die Außenscheiben sind, so dass die mit wechselnder Intensität bestrahlende Rückseite des Smart Windows durch das natürliche Umgebungslicht erfolgt. Nicht ausgeschlossen ist die Möglichkeit der Anbringung an einer Innenscheibe, sofern eine Hinterleuchtung mit künstlichem Licht wechselnder Intensität vorliegt. Dabei steht im Rahmen der Erfindung grundsätzlich frei, ob die Anzeigevorrichtung nur einen Teil des Fensters oder sich über die gesamte Fläche des Fensters erstreckt. Bei einer teilweisen Abdeckung entspricht es dem gewohnten Bild, wenn die Anzeigevorrichtung am oberen Rand der Scheibe horizontal ausgerichtet befestigt wird. Die angezeigten Schriften und Bilder sind auch aus größerer Entfernung frei einsehbar und werden selten verdeckt und finden sich in einem Bereich des Fahrzeuges, in dem in ständiger Gewöhnung die üblichen Informationen angezeigt werden, wie z.B. Ziel, Fahrtroute und Identifizierung der jeweils benutzten Fahrstrecke durch Angaben der Fahrstreckennummer. Der Anwendungsbereich ist gegenüber den konventionellen Fahrzeuganzeigen jedoch erweiterbar und sie kann auch aktuelle Informationen zur Fahrt, Sondernachrichten bei Fahrzeugen mit Verspätungen, politische Nachrichten und auch dazu genutzt werden, um den Passagieren Filme zur Unterhaltung darzubieten.

Aufgrund wechselnder Lichtverhältnisse ist die erfindungsgemäß vorgeschlagene Vorrichtung vor allem zur Verwendung an den Fenstern von Fahrzeugen, Zügen, Flugzeugen und dergleichen geeignet, wo eine Hinterleuchtung durch natürliches Licht in wechselnder Stärke erfolgt und wo die Notwendigkeit besteht dem Fahrgast aktuelle Informationen über die Fahrt, Fahrplanänderungen, Anschlusssituationen aber auch ggf. Werbung und Ähnlichem zu vermitteln. Die Vorrichtung wird dann von der Innenseite her an der Außenscheibe befestigt.

In aller Regel wird die Anzeigevorrichtung als eine kompakte Einheit hergestellt undz. B. als kompakte Einheit in den Fensterrahmen integriert..

Eine besondere Anordnung, die jedoch nicht gemäss der Erfindung wie beansprucht ist, besteht darin, dass das Smart Window der Anzeigevorrichtung in seiner Funktion durch die Scheibe des Fensters übernommen wird. Scheibe und Smart Window sind demnach einstückig.

Als vorteilhaft wird angesehen, wenn der Bildschirm und/oder ggf. die zwischen Bildschirm und Smart Window vorhandenen Lichtquellen auf hohe Transparenz einstellbar ist. Besonders durch die Verwendung von TFTs als Bauelemente des Bildschirms und/oder oLED bzw. pLED als Lichtquellen im Zwischenraum von Bildschirm und Smart Window ist die bauliche Umsetzung ohne weiteres möglich. Diese Ausgestaltung erlaubt bei Einstellung von Bildschirm und Smart Windows und ggf. der Lichtquellen auf Transparenz ein ungehindertes "Nachaußenblicken" zu erhalten, d. h. dass der Fahrgast von der Innenseite ohne größere Behinderung nach außen blicken kann. Im Ergebnis wäre dann die gesamte erfindungsgemäße Vorrichtung durch den Betrachter "optisch" nicht mehr erkennbar und damit "verschwunden".

Gemäß vorliegender Erfindung ist die Anzeigeeinheit so ausgestaltet, dass auch eine Umkehrung der Betrachtungsrichtung möglich ist, d.h. bei Anbringung an einem Außenfenster z.B. eines Bahnwagons oder Reisebusses, dass die angezeigte Information je nach Bedarf entweder, wie bisher beschrieben, von innen oder aber auch von außen betrachtet werden kann. Dies wird erfindungsgemäß auf zwei Wegen erreicht. Zum einen dadurch, dass zwei Smart-Window Elemente Verwendung finden, eines, wie bisher beschrieben, in Blickrichtung von Innen in einem gewissen Abstand hinter- und ein zusätzliches in einem ähnlichen Abstand vor dem Bildschirm. Zum anderen auch dadurch, dass das weiterhin nur ein Smart Window eingesetzt wird, welches jedoch anders als bisher nicht mehr nur ein "monochromes Ein-Pixel-Display" darstellt, sondern als vollwertiger Bildschirm, insbesondere als ein dem oben beschriebenen Bildschirm auf der Anzeigeninnenseite entsprechender farbiger TFT-, oLED oder EL Bildschirm, ausgeführt ist.

Um von außen betrachtbar zu sein, würde in Richtungsumkehrung der bisher beschriebenen Wirkungsweise im ersten Fall das bei Blickrichtung von außen vor dem Bildschirm gelegene Smart Window auf Transmission geschaltet und das bei besagter Blickrichtung hinter dem Bildschirm gelegene, zusätzliche Smart Window auf nicht transparent geschaltet werden, wobei letzeres dann als Reflektor für die LED-Lichtquelle fungiert. Um bei unzureichender Intensität des aus dem Fahrzeuginneren in Blickrichtung von außen rückseitig auf den Bildschirm auftreffenden Lichtes eine ablesbare Anzeige zu erreichen, wird im Allgemeinen eine zusätzliche Hintergrundbeleuchtung, insbesondere eine LED Leuchtschiene, benötigt, die vorteilhafterweise parallel zur ersten Leuchtschiene, jedoch auf der anderen Seite des Bildschirms, zwischen dem Bildschirm und dem zweiten Smart Window, angebracht ist. Weiterhin muss, um Text bzw. Bilder spiegelsymmetrisch korrekt anzuzeigen, noch eine Geradenspiegelung der angezeigten Information an der Hochachse durchgeführt werden (relativ zu einer vom Fahrzeuginneren aus lesbaren/korrekten Darstellung), was bei einer computergesteuerten Anzeige vorteilhafterweise per Software erfolgt.

Im zweiten Fall wird die anzuzeigende Information auf dem als vollwertigen Bildschirm ausgeführten Smart Window dargestellt, während der bisherige Bildschirm die Funktion des Smart-Windows übernimmt. Bei dieser Ausführung kann die schon vorhandene Hintergrundbeleuchtung zur Ergänzung der Lichtintensität verwendet werden und die Anbringung einer zweiten Hintergrundbeleuchtung erübrigt sich. Es ist aber darauf zu achten, dass der Sensor zur Lichtintensitätsmessung in beide Richtungen funktioniert, entweder indem zwei entgegengesetzt ausgerichtete Sensoren verwendet werden oder ein auf beiden Seiten (in Richtung Bildschirm als auch in Richtung Smart Window) lichtsensitives Element Verwendung findet.

Ein als Bildschirm ausgeführtes Smart Window hat den Vorteil, dass die in der Anzeigeneinheit vorhandene Lichtquelle auch zur Hintergrundbeleuchtung einer von außen betrachtbaren Anzeige nutzbar ist und außerdem, da nur zwei transmissionssteuerende flächige Elemente (ein Bildschirm und ein Smart Window) mit dazwischengelegenem Abstand vorhanden sind, dass die Anzeigeneinheit insgesamt eine geringere Tiefe aufweist und platzsparender einzubauen ist. Bei einer einstückigen Ausführung von Smart Window und (Fenster-)Scheibe (allerdings nicht erfindungsgemäß) ist dies jedoch nur schwer zu realisieren, da die ganze oder zumindest ein Teil der Fensterscheibe mit einer TFT-Matrix zu versehen wäre. Außerdem erhöhen sich, da zwei vollwertige Bildschirme mit der nötigen Ansteuerelektronik vorhanden sind, Herstellungsaufwand und -kosten pro Einheit nicht unerheblich. Die erste oben beschriebene Lösung, nur einen Bildschirm mit zwei Smart Window Elementen, jeweils eines vor und eines hinter dem Bildschirm, einzusetzen, ist kostengünstiger, hat aber den Nachteil zu einer insgesamt höhren Einbautiefe der Anzeigeneinheit zu führen, da hier drei transmissionssteuerende flächige Elemente jeweils in einem gewissen Abstand übereinander angeordnet sind.

Weitere Einzelheiten, Merkmale und Vorteile der Erfindung lassen sich demnach folgenden Beschreibungsteilen entnehmen, in dem anhand der Zeichnung ein Ausführungsbeispiel näher erläutert wird. Es zeigen:

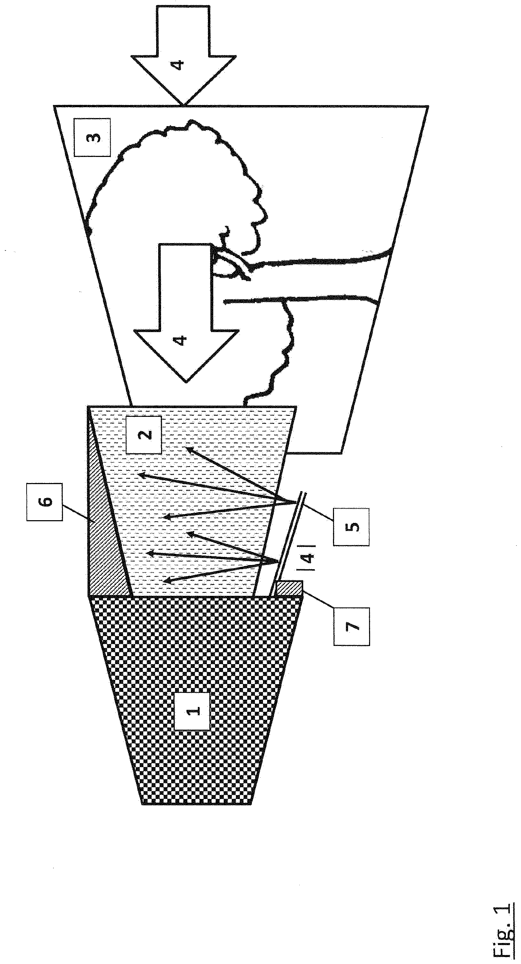

Fig. 1 einen Schnitt durch die Anzeigevorrichtungen

Fig. 1 zeigt eine in perspektivischer Darstellung gehaltene Prinzipskizze der Anzeigevorrichtung. Sie besteht in ihrem grundsätzlichen Aufbau aus einem Bildschirm 1, der z. B. ein LCD oder auch ein TFT-Display sein kann. Im Abstand hierzu parallel ausgerichtet und etwa von den gleichen Abmessungen findet sich ein Smart Window 2, dessen wesentliche Eigenschaft darin besteht, die Durchlässigkeit für Licht durch entsprechende Ansteuerung unterschiedlich einstellen zu können. Im allgemeinsten Fall erstreckt sich der Bereich der Lichtdurchlässigkeit von völliger Lichtdurchlässigkeit bis hin zur teilweisen (transluzent) oder vollständigen Lichtundurchlässigkeit. Die Anzeigevorrichtung ist dazu bestimmt, an einer hinterleuchteten Scheibe 3 von der Innenseite her befestigt zu werden, so dass dann das Smart Window 2 und die Scheibe 3 plan aufeinander aufliegen. Das Außenlicht 4 geht vom Außenraum aus, tritt durch die Scheibe 3, als auch das Smart Window 2 im befestigten Zustand, hindurch und gelangt dann auf die Rückseite des Bildschirms 1. Nur bei Transparenz des Smart Windows wird das von außen auftreffende Licht mehr oder weniger geschwächt in den Raum eintreten, der sich zwischen dem Display 1 und Smart Window 2 aufgespannt wird.

Aufgrund der wechselnden Intensität des Außenlichts 4 reicht die Intensität des auf der Rückseite des Bildschirmes auftreffenden Lichts während jeder Betriebsphase zu einer gleichförmigen und ausreichenden Beleuchtung des Bildschirmes 1 nicht aus. Aus diesem Grund ist eine additive Überlagerung mit dem Licht einer anderen Lichtquelle unabdingbar. Zu diesem Zweck wird eine LED-Schiene 5 vorgesehen, die etwa mittig in der Fläche angeordnet ist, die von den horizontalen Unterkanten vom Bildschirm 1 und Smart Window 2 beschrieben werden. Das durch den Bildschirm 1, das Smart Window 2 und von der Fläche umgrenzte Volumen wird durch die der LED-Schienen gegenüberliegenden Gegenfläche, die durch die obere Berandung des Bildschirmes 1 und dem Smart Window mit einer Reflektorfläche 6 zu einem vollständig geschlossenen Quader ergänzt, der dafür Sorge trägt, dass das von der LED-Schiene 5 aber auch vom Smart Window 2 ausgehende und ggf. reflektierte Licht, nämlich dann wenn es von der LED-Schiene 5 herlangt, an der Reflektorfläche umgelenkt und aufgrund der Reflexionsgesetze ebenfalls an der Rückseite des Bildschirmes hingeführt wird. Demzufolge wird nicht nur das direkt von der LED-Schiene ausgehende Licht und das von dem Außenlicht 4 beigesteuerten Betrag zusätzlich noch durch jene Lichtintensitäten verstärkt, die über die Reflektorfläche 6 beigetragen werden, unabhängig davon, ob die entsprechenden Lichtanteile von der LED-Schiene 5 oder vom Außenlicht 4 herrühren.

Auf der den Lichtquellen (LED-Schiene 5, Außenlicht 4) zugeordneten Fläche des Bildschirmes 1, also in Blickrichtung an der Hinterseite, befindet sich ein optischer Sensor 7, der dort zur Erfassung der Lichtintensität angebracht ist, jedoch derart positioniert, dass er die Beleuchtung der Rückfläche des Bildschirmes 1 nicht behindert. Mit Hilfe des optischen Sensors 7 wird festgestellt, ob die auf der Rückseite des Bildschirmes 1 anlangende Lichtintensität ausreichend ist, um den Bildschirm funktionsfähig zu halten. Die Aufgabe des optischen Sensors 7 besteht darin, die LED-Schiene 5 derart anzusteuern und deren Intensität in der Weise einzustellen, dass die gesamte auf der Rückseite des Bildschirmes 1 anlangende Lichtintensität trotz wechselnden Intensität des Außenlichtes 4 konstant bleibt und die Funktionsfähigkeit des Bildschirmes 1 sicherstellt. Klarzustellen ist, dass eine Änderung des auf der Rückseite des Bildschirms 1 auftreffenden Lichtes nicht nur originär durch Wechseln der Intensität des Umgebungslichtes (= Außenlicht 4) sondern auch durch entsprechende Einstellungen des Smart Windows 2 beeinflusst wird bzw. beeinflusst werden kann.

Die erfindungsgemäße Anzeigevorrichtung erlaubt mit einem Minimum an aufzuwendende Energie und damit in einem Energiesparmodus einen zuverlässigen Betrieb des Bildschirmes 1 sicherzustellen.

### Bezugszeichenliste

- 1: Bildschirm
- 2: Smart Window
- 3: Scheibe
- 4: Außenlicht
- 5: LED-Schiene
- 6: Reflektorfläche
- 7: Optischer Sensor

## Patentansprüche

1. Anzeigevorrichtung für Schriften und Bilder zur Anbringung auf lichtdurchlässigen Scheiben (3), die von der Rückseite der Scheiben mit Licht wechselnder Intensität beaufschlagt sind, umfassend
- einen elektrischen Bildschirm (1) als eine lichtdurchlässige Anzeigetafel zur unmittelbaren Anzeige von Informationen bestehend aus einer Vielzahl von rasterartig angeordneten und elektronisch angesteuerten Bildpunkten,
- in Blickrichtung hinter der Rückseite befindliche, eine LED-Beleuchtung erzeugende Lichtquellen (5), und
- ein hinter dem Bildschirm (1) parallel zu diesem angeordnetes, Smart Window (2), also ein optisch von transparent zu transluzent bis lichtundurchlässig schaltbares Fenster,
wobei das Smart Window (2) in einem solchen Abstand angeordnet ist, dass die Lichtquellen (5) zwischen Bildschirm (1) und Smart Window (2) positioniert sind, und
wobei ein optischer Sensor (7) zur Erfassung des auftreffenden Lichtes vorhanden ist, durch den die LED-Beleuchtung in ihrer Intensität in der Weise gesteuert wird, dass die auf der Rückseite des Bildschirms (1) auftreffende Lichtintensität im Wesentlichen konstant ist, **dadurch gekennzeichnet, dass** die Anzeigevorrichtung so ausgestaltet ist, dass eine Umkehrung der Betrachtungsrichtung, also Betrachtung von der Rückseite des Bildschirms (1) her, möglich ist und zwar indem
- das Smart Window (2) eine Vielzahl von rasterartig angeordneten Bildpunkten umfasst, insbesondere als TFT-Matrixdisplay ausgeführt ist, wobei der Bildschirm die Funktion des Smart Windows übernimmt und der Sensor (7) eine Lichtintensitätsmessung in beiden Richtungen gestattet, oder
- ein zweites Smart Window vorhanden ist, welches relativ zum ersten Smart Window (2) auf der gegenüberliegenden Seite des Bildschirms (1) in einem vergleichbaren Abstand wie das erste Smart Window (2) positioniert ist, sowie eine zweite Lichtquelle vorhanden ist, welche
∘ zwischen dem Bildschirm und dem zweiten Smart Window befindlich ist, und
∘ bei umgekehrter Betrachtungsrichtung zur Hintergrundbeleuchtung dient, und
wobei die Anzeigevorrichtung dazu vorbereitet ist, eine Geradenspiegelung der auf dem Bildschirm angezeigten Information an einer Hochachse durchzuführen, um bei Umkehrung der Betrachtungsrichtung die Information spiegelsymmetrisch korrekt anzuzeigen.

2. Vorrichtung nach Anspruch 1, **dadurch gekennzeichnet, dass** bei einer Lichtintensität des von außen auftreffenden Lichtes unterhalb eines Schwellwertes die Transmission des Smart Window (2) ab- und/oder auf Reflexion, insbesondere durch Anzeige der Farbe Weiß, schaltbar ist.

3. Vorrichtung nach Anspruch 1 oder 2, **dadurch gekennzeichnet, dass** die die LED-Beleuchtung erzeugenden Lichtquellen (5) in einer von den jeweils gegenüberliegenden Randkanten von Bildschirm (1) und Smart Window (2) definierten Fläche liegen.

4. Vorrichtung nach Anspruch 3, **dadurch gekennzeichnet, dass** in einer gegenüber der Fläche der Lichtquellen (5) liegenden, von den Längskanten des Bildschirms (1) und dem Smart Window (2) ebenfalls definierten Gegenfläche ein Reflektor (6) angeordnet ist.

5. Vorrichtung nach einem der vorhergehenden Ansprüche, **dadurch gekennzeichnet, dass** die LED-Lichtquellen eine LED-Schiene (5) bilden.

6. Vorrichtung nach einem der vorhergehenden Ansprüche, **dadurch gekennzeichnet, dass** der Bildschirm ein LCD-Bildschirm oder ein TFT-Bildschirm ist.

7. Vorrichtung nach einem der vorhergehenden Ansprüche, **dadurch gekennzeichnet, dass** die LED-Beleuchtung aus LEDs und/oder oLED, d.h. organische LED, und /oder pLED, d.h. polymere LED, aufgebaut ist.

8. Vorrichtung nach einem der vorhergehenden Ansprüche, **dadurch gekennzeichnet, dass** der optische Sensor (7) unmittelbar am Smart-Window (2) in einer solchen Ausrichtung angebracht ist, dass er die Intensität des von außen auf das Smart Window (2) auftreffenden Lichtes erfasst und der Sensor (7) die Intensität der LED-Beleuchtung derart einstellt, dass die aus der Summe der aus dem auftreffenden Licht und der durch die Lichtquellen (5) emittierten Lichtintensität im Bereich des Bildschirmes (1) konstant ist.

9. Vorrichtung nach einem der Ansprüche 1 bis 7, **dadurch gekennzeichnet, dass** der optische Sensor (7) auf der Rückseite des Bildschirms (1) angeordnet ist und dort die Summe der aus dem durch das Smart Window (2) hindurchtretenden und von außen auftreffenden und der von den Lichtquellen (5) erzeugten Lichtintensität misst und durch die Ansteuerung der Lichtquellen stets sicherstellt, dass die auftreffende und vom optischen Sensor (7) gemessene Intensität konstant ist.

10. Vorrichtung nach einem der vorhergehenden Ansprüche, **dadurch gekennzeichnet, dass** die Anzeigevorrichtung auf der Fensterscheibe eines Fahrzeuges, bevorzugt an der Außenscheibe und insbesondere von der Innenseite her, angebracht ist.

11. Vorrichtung nach einem der vorhergehenden Ansprüche, **dadurch gekennzeichnet, dass** die Anzeigevorrichtung eine kompakte für die Integration im Fensterrahmen vorbereitete Einheit ist.

12. Vorrichtung nach einem der vorhergehenden Ansprüche, **dadurch gekennzeichnet, dass** die Lichtquellen auf Transparenz schaltbar sind.

## Claims

1. A display device for text and images for attachment to translucent panes (3) to which light of varying intensity is applied from the back of the panes, comprising
- an electrical screen (1) as a translucent display panel for the direct display of information consisting of a large number of electronically controlled pixels arranged in a grid-like manner,
- LED lighting generating light sources (5) located behind the rear in a direction of view, and
- a Smart Window (2) arranged behind the screen (1) parallel to it, that is, a window that can be optically switched from transparent to translucent to opaque,
wherein the smart window (2) is arranged at such a distance that the light sources (5) are positioned between the screen (1) and the smart window (2), and
wherein there is an optical sensor (7) for detecting the incident light, by means of which the LED lighting is controlled in its intensity in such a way that the light intensity incident on the back of the screen (1) is essentially constant,
**characterized in that**
the display device is designed so that a reversal of the viewing direction, that is, viewing from the rear of the screen (1), is possible by
- the Smart Window (2) comprising a large number of image points arranged in a grid-like manner, in particular designed as a TFT matrix display, the screen taking over the function of the Smart Windows and the sensor (7) allowing light intensity measurement in both directions, or
- a second smart window being present, which is positioned relative to the first smart window (2) on the opposite side of the screen (1) at a comparable distance as the first smart window (2), and a second light source is present which
• is positioned between the screen and the second Smart Window, and
• is used for background lighting when viewed in the opposite direction, and
wherein the display device is prepared to carry out a mirror reflection with respect to a vertical axis in order to display the information mirror-symmetrically correct when the viewing direction is reversed.

2. Device according to claim 1, **characterized in that** when the light intensity of the light impinging from the outside is below a threshold value, the transmission of the smart window (2) can be switched off and / or to reflection, in particular by displaying the color white.

3. Device according to claim 1 or 2, **characterized in that** the light sources (5) generating the LED lighting lie in a area defined by the respective opposite edges of the screen (1) and the smart window (2).

4. Device according to claim 3, **characterized in that** a reflector (6) is arranged in a counter-area opposite the area of the light sources (5) which is also defined by the longitudinal edges of the screen (1) and the smart window (2).

5. Device according to one of the preceding claims, **characterized in that** the LED light sources form an LED rail (5).

6. Device according to one of the preceding claims, **characterized in that** the screen is an LCD screen or a TFT screen.

7. Device according to one of the preceding claims, **characterized in that** the LED lighting is made up of LEDs and / or oLEDs, i.e. organic LEDs, and / or pLEDs, i.e. polymer LEDs.

8. Device according to one of the preceding claims, **characterized in that** the optical sensor (7) is attached directly to the smart window (2) in such an orientation, that it registeres the intensity of the light incident on the Smart Window (2) from outside and that the sensor (7) adjusts the intensity of the LED lighting such that the sum of the incident light and the light intensity generated by the light sources (5) in the region of the screen (1) is constant.

9. Device according to one of the claims 1 to 7, **characterized in that** the optical sensor (7) is arranged on the back of the screen (1) and there measures the sum of the light intensity of light incident on and passing through the Smart Window (2) and the light intensity generated by the light sources (5) and by controlling the light sources always ensures that the incident intensity and the intensity measured by the sensor (7) is constant.

10. Device according to one of the preceding claims, **characterized in that** the display device is attached to the window pane of a vehicle, preferably on the outer pane and in particular from the inside.

11. Device according to one of the preceding claims, **characterized in that** the display device is a compact unit prepared for integration in the window frame.

12. Device according to one of the preceding claims, **characterized in that** the light sources can be switched to transparency.

## Revendications

1. Dispositif d'affichage pour écriture et images à fixer sur des panneaux translucides (3) auxquels une lumière d'intensité variable est appliquée depuis l'arrière des panneaux, comprennant
- un écran électrique (1) en tant que panneau d'affichage translucide pour l'affichage immédiat d'informations constituées d'un grand nombre de pixels contrôlés électroniquement disposés en grille,
- un éclairage à LED générant des sources lumineuses (5) situées derrière l'arrière dans le sens de la vue, et
- une fenêtre intelligente (2) disposée derrière l'écran (1) parallèlement à celui-ci, c'est-à-dire une fenêtre qui peut être commutée optiquement de transparent à translucide à opaque, dans lequel la fenêtre intelligente (2) est disposée à une distance telle que les sources de lumière (5) sont positionnées entre l'écran (1) et la fenêtre intelligente (2), et dans lequel il y a un capteur optique (7) pour détecter la lumière incidente, au moyen duquel l'éclairage LED est commandé dans son intensité de telle sorte que l'intensité lumineuse incidente à l'arrière de l'écran (1) soit essentiellement constante,
**caractérisé en ce que**
le dispositif d'affichage est conçu de telle sorte qu'une inversion de la direction d'observation, c'est-à-dire une vue depuis l'arrière de l'écran (1), soit possible en
- la fenêtre intelligente (2) comprend un grand nombre de pixels disposés en grille, notamment conçu comme un afficheur matriciel TFT, l'écran prenant en charge la fonction de la fenêtre intelligente et le capteur (7) permettant la mesure de l'intensité lumineuse dans les deux sens, ou
- une deuxième fenêtre intelligente est présente, qui est positionnée par rapport à la première fenêtre intelligente (2) sur le côté opposé de l'écran (1) à une distance comparable à celle de la première fenêtre intelligente (2), et une deuxième source de lumière est présente lequel
* est situé entre l'écran et la deuxième fenêtre intelligente, et
* est utilisé pour l'éclairage d'arrière-plan lorsqu'il est vu dans la direction opposée,
et dans lequel le dispositif d'affichage est préparé pour effectuer une miroitement en ligne droite des informations affichées sur l'écran sur un axe vertical afin d'afficher les informations symétriquement correctes lorsque la direction de visualisation est inversée.

2. Dispositif selon la revendication 1, **caractérisé en ce que** lorsque l'intensité lumineuse de la lumière venant de l'extérieur est inférieure à une valeur seuil, la transmission de la fenêtre intelligente (2) peut être éteinte et / ou changé en réflexion, notamment par affichage de la couleur blanche.

3. Dispositif selon la revendication 1 ou 2, **caractérisé en ce que** les sources lumineuses (5) générant l'éclairage LED se trouvent dans une face délimitée par le bord opposé respectif de l'écran (1) et de la fenêtre intelligente (2).

4. Dispositif selon la revendication 3, **caractérisé en ce qu'**un réflecteur (6) est agencé dans une contre-face opposée à la face des source lumineuses (5) qui est également définie par les bords longitudinaux de l'écran (1) et de la fenêtre intelligente (2).

5. Dispositif selon l'une des revendications précédentes, **caractérisé en ce que** les sources lumineuses LED forment un rail LED (5).

6. Dispositif selon l'une des revendications précédentes, **caractérisé en ce que** l'écran est un écran LCD ou un écran TFT.

7. Dispositif selon l'une des revendications précédentes, **caractérisé en ce que** l'éclairage LED est constitué de LED et / ou oLED, c'est-à-dire LED organiques, et / ou pLED, c'est-à-dire LED polymère.

8. Dispositif selon l'une des revendications précédentes, **caractérisé en ce que** le capteur optique (7) est fixé directement sur la fenêtre intelligente (2) dans une orientation telle qu'il mesure l'intensité de la lumière incidente sur la fenêtre intelligente (2) de l'extérieur et le capteur (7) et ajuste l'intensité de l'éclairage LED de telle sorte que la somme de l'intensité lumineuse émise par la lumière incidente et de l'intensité lumineuse émise par les sources lumineuses (5) dans la zone du l'écran (1) est constante.

9. Dispositif selon l'une des revendications 1 à 7, **caractérisé en ce que** le capteur optique (7) est disposé au dos de l'écran (1) et là mesure la somme des valeurs l'intensité lumineuse passant par la fenêtre intelligente (2) provenant de l'extérieur et l'intensité lumineuse générée par les sources lumineuses (5) et, en commandant les sources lumineuses, garantit toujours que l'intensité incidente mesurée par le capteur optique (7) est constante.

10. Dispositif selon l'une des revendications précédentes, **caractérisé en ce que** le dispositif d'affichage est monté sur la vitre d'un véhicule, de préférence sur la vitre extérieure et notamment de l'intérieur.

11. Dispositif selon l'une des revendications précédentes, **caractérisé en ce que** le dispositif d'affichage est une unité compacte préparée pour l'intégration dans le cadre de la fenêtre.

12. Dispositif selon l'une des revendications précédentes, **caractérisé en ce que** les sources lumineuses peuvent être commutées en transparence.
